# EUROPÄISCHE PATENTSCHRIFT

(11) **EP 0 534 072 B1**
(45) Veröffentlichungstag und Bekanntmachung des Hinweises auf die Patenterteilung: **26.04.1995**
(21) Anmeldenummer: 92111600.0
(22) Anmeldetag: 08.07.1992
(51) Int. Cl.: B64C 1/14

(54) **Trittplatte für eine Flugzeug-Passagiertür**
Protective plate for a passenger aircraft door
Plaque de protection pour une porte d'avion passager

(30) Priorität: 24.09.1991 DE 9111902 U
(43) Veröffentlichungstag der Anmeldung: 31.03.1993
(73) Patentinhaber: Daimler-Benz Aerospace Airbus Gesellschaft mit beschränkter Haftung, 21129 Hamburg (DE)
(72) Erfinder: Lubensky, Gert, W-2152 Horneburg (DE); Paul, Carsten, W-2091 Garstedt (DE)
(74) Vertreter: Hansmann, Dierk, Dipl.-Ing.

(56) Entgegenhaltungen:
- EP-A- 0 339 238
- DE-A- 3 606 812
- US-A- 2 961 692

## Beschreibung

Die Erfindung bezieht sich auf eine Trittplatte für eine Flugzeug-Passagiertür. Eine derartige Trittplatte hat im wesentlichen die Aufgabe, den Schwellenbereich einer Flugzeugtür von Kondens- und Regenwasser freizuhalten sowie Schubkräfte aus der Fußbodenkonstruktion zu übertragen.

Derartige Trittplatten sind von gestreckter annähernd rechteckiger Grundform mit einer innenbordseitigen und einer außenbordseitigen Längskante und sind mittels Schraubbolzen zu befestigen. Die außenbordseitige bzw. innenbordseitige Längskante wird im folgenden kurz äußere bzw. innere Längskante genannt. Eine bekannte Trittplatte dieser Art ist dreiteilig ausgeführt, so daß deren mittlerer Teil leicht austauschbar ist. Die beiden seitlichen Teile sind dagegen nur mit erhöhtem Arbeitsaufwand austauschbar. Dies wird dadurch verursacht, daß im Falle eines Austausches der seitlichen Teile zunächst in deren jeweiligem Endbereich ein hier angeordneter Notrutschenbeschlag zu lösen ist. Jedes dieser Teile ist als Sandwichplatte ausgebildet, wobei die Struktur, die die Teile letztlich aufnimmt, zusammen mit der Trittplatte verschiedene schwer drainierbare Hohlräume bildet. Eine derartige Trittplatte besteht aus einer Vielzahl von Einzelteilen und verursacht daher relativ hohe Fertigungskosten.

Demgemäß liegt der Erfindung die Aufgabe zugrunde, eine gattungsgemäße Trittplatte derart auszubilden, daß deren Austausch mit wesentlich reduziertem Arbeitsaufwand durchführbar ist und eine wirksame Drainage der umgebenden Struktur erreicht wird, wobei die Platte selbst mit geringerem Aufwand herstellbar ist.

Diese Aufgabe wird bei einer gattungsgemäßen Trittplatte durch die kennzeichnenden Merkmale des Anspruchs 1 gelöst.

Dabei ist insbesondere von Vorteil, daß aufwendige Justierarbeiten an den Notrutschenbeschlägen nach einem Austausch der betreffenden Trittplatten entfallen.

Vorteilhafte Weiterbildungen der Erfindung sind in den Unteransprüchen angegeben.

So besteht ein Vorteil der Ausgestaltung nach Anspruch 2 darin, daß eine Ansammlung von Flächenwasser auf der Trittplatte vermieden wird.

Die Erfindung ist anhand der Zeichnung dargestellt und nachfolgend näher erläutert. Es zeigen
- Fig. 1: eine Teildraufsicht auf eine Trittplatte,
- Fig. 2: den Schnitt II-II nach Fig. 1,
- Fig. 3: perspektivisch das rechte Ende der Trittplatte nach Fig. 1.
- Fig. 4: eine Teildraufsicht auf eine Trittplatte,
- Fig. 5: den Schnitt V-V nach Fig. 4 und
- Fig. 6: den Teilschnitt VI-VI nach Fig. 4.

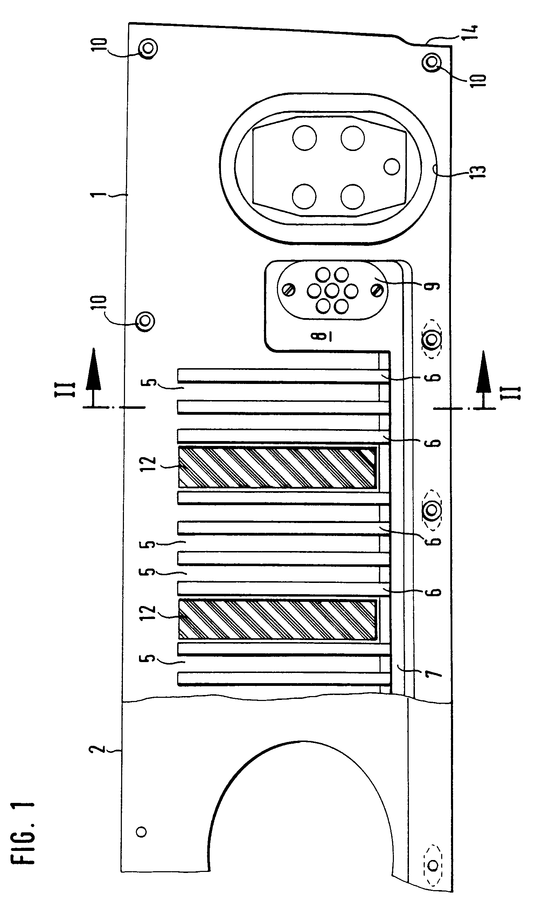

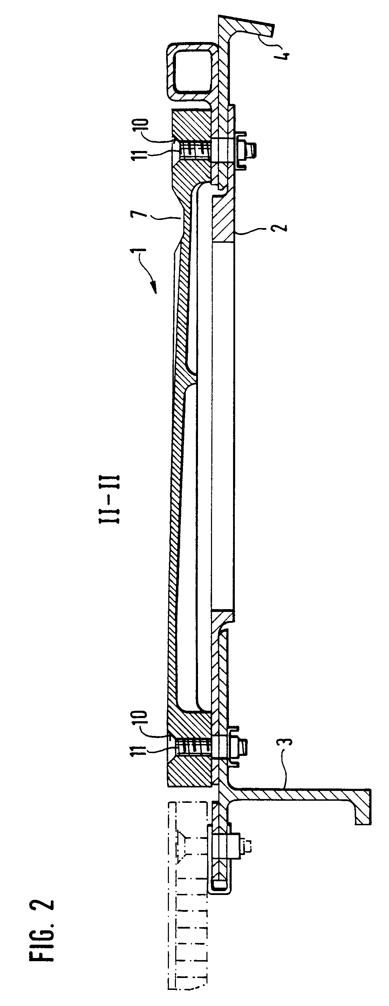

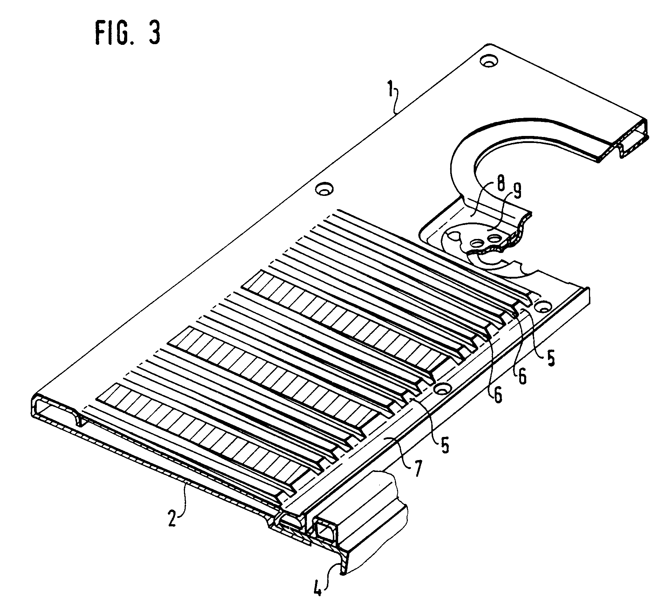

Die Figuren 1 bis 3 zeigen den beim Betreten des Flugzeuges rechten Bereich einer Trittplatte 1 mit der umgebenden Struktur in eingebautem Zustand. Zu dieser Struktur zählen im wesentlichen eine Türschwelle 2, ein Träger 3 sowie ein Randprofil 4. Die Oberfläche der einteilig ausgebildeten Trittplatte 1 ist mit Rippen 5 versehen. Zwischen den einzelnen Rippen 5 befinden sich Drainagekanäle 6, die einen Sammelkanal 7 einmünden. Der Sammelkanal 7 steht mit einem Sammelbecken 8 in Verbindung, das mit einem hier nicht sichtbaren Drainagetrichter in Verbindung steht. Die Abflußöffnung zum Drainagetrichter ist nach oben mit einem Siebdeckel 9 abgedeckt. Die Trittplatte 1 weist Senkbohrungen 10 zur Befestigung an der Struktur mittels Schraubbolzen 11 auf. Die Dicke der Trittplatte 1 ist im Bereich des Trägers 3 größer als im Bereich des Randprofils 4, so daß die Oberfläche der Trittplatte 1 in sich bereits ein Gefälle zum Randprofil 4 hin aufweist. In festen Abständen sind zwischen den Drainagekanälen 6 breitere Flächenbereiche 12 zum Aufkleben eines Antirutschstreifens vorgesehen. Im rechten Randbereich der Trittplatte 1 ist eine ovale Öffnung 13 zur Anpassung der Trittplatte 1 an ein hier nicht näher gezeigtes Element der Struktur angeordnet. Aus dem gleichen Grunde weist die Trittplatte 1 in Fig. 1 unten rechts eine Ausklinkung 14 auf.

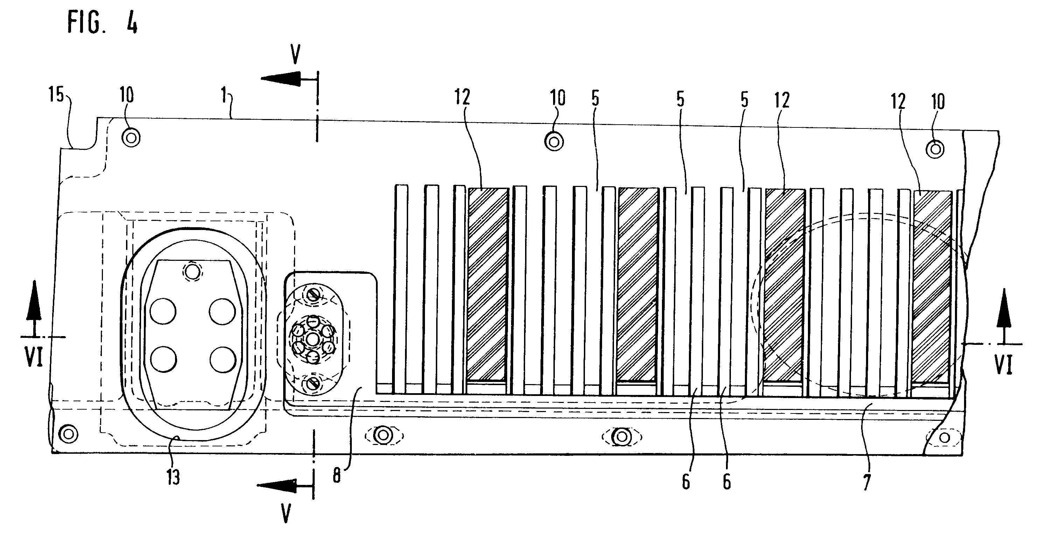

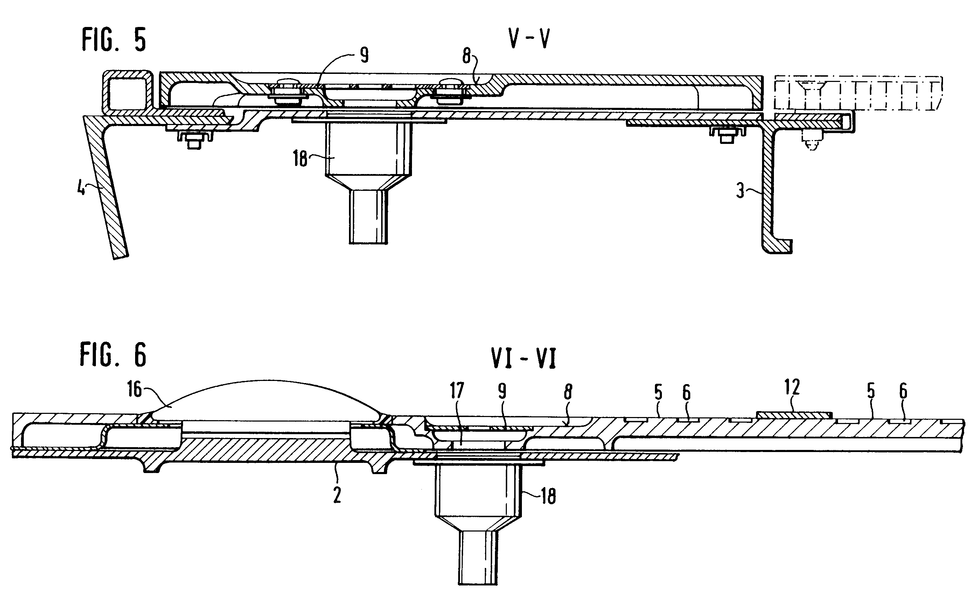

Die Figuren 4 bis 6 zeigen den linken Bereich der Trittplatte 1. Auch dieser Bereich weist Rippen 5 und Drainagekanäle 6 auf, wobei auch hier ein mit einem Siebdeckel 9 abgedecktes weiteres Sammelbecken 8 vorgesehen ist, in das das linke Ende des Sammelkanals 7 einmündet. Die Tiefe aller Nuten 6 beginnt nahe der inneren Längskante und nimmt auf einen Wert zu, der bei Einmündung in den Sammelkanal 7 kleiner oder gleich der Tiefe des Sammelkanals 7 ist. In Fig. 4 oben links ist eine hier mit 15 bezeichnete Ausklinkung zur Anpassung an die Struktur angeordnet. Auch im linken Endbereich der Trittplatte 1 befindet sich eine Öffnung 13. Wie der Schnitt VI-VI zeigt, ist hier Beschlag 16, der zur Befestigung einer Notrutsche dient, fest mit der Türschwelle 2 verbunden. Durch die gezeigte Ausbildung der Öffnungen 13 wird erreicht, daß der Beschlag 16 nicht gelöst werden muß, wenn die Trittplatte 1 zu erneuern ist. Nach erfolgter Montage der Trittplatte 1 wird die zwischen dem Beschlag 16 und der Trittplatte 1 bestehende Fuge mittels einer Dichtmasse verschlossen. Unterhalb des Siebdeckels 9 befindet sich eine Abflußöffnung 17, die mit einem an der Türschwelle 2 fest angeordneten Drainagetrichter 18 in Verbindung steht.

Die vorbeschriebene Trittplatte 1 ist mit relativ geringem Aufwand zu fertigen und im Falle einer Reparatur leicht austauschbar.

## Patentansprüche

1. Trittplatte für eine Flugzeug-Passagiertür von gestreckter annähernd rechteckiger Grundform mit einer inneren und einer äußeren Längskante, die mittels Schraubbolzen zu befestigen ist, dadurch **gekennzeichnet**, daß die Trittplatte als einteiliges sich über die gesamte Türbreite erstreckendes Frästeil mit nach außenbords gerichtetem Gefälle ausgebildet ist und in einen entlang der äußeren Längskante verlaufenden Sammelkanal (7) einmündende Drainagekanäle (6) aufweist, wobei jeweils zwischen zwei Drainagekanälen (6) eine Rippe (5) angeordnet ist und beide Enden des Sammelkanals (7) je in ein Sammelbecken (8) mit einer Abflußöffnung (17) einmünden.

2. Trittplatte nach Anspruch 1,
dadurch **gekennzeichnet**, daß die Drainagekanäle (6) zum Sammelkanal (7) hin ein Gefälle aufweisen.

3. Trittplatte nach Anspruch 1 oder 2,
dadurch **gekennzeichnet**, daß die Trittfläche im Bereich der Rippen (5) durch deren Oberkanten gebildet wird.

4. Trittplatte nach einem der Ansprüche 1 bis 3,
dadurch **gekennzeichnet**, daß zwischen den Rippen (5) und Drainagekanälen (6) in annähernd gleichen Abständen Flächenbereiche (12) zum Aufkleben eines Antirutschstreifens angeordnet sind.

5. Trittplatte nach einem der Ansprüche 1 bis 4,
**gekennzeichnet** durch Öffnungen (13) zur Anpassung der Trittplatte (1) an die umgebende Struktur.

6. Trittplatte nach einem der Ansprüche 1 bis 5,
**gekennzeichnet** durch Ausklinkungen (14,15) zur Anpassung der Trittplatte (1) an die umgebende Struktur.

7. Trittplatte nach einem der Ansprüche 1 bis 6,
dadurch **gekennzeichnet**, daß die Sammelbecken (8) jeweils mit einem Siebdeckel (9) abgedeckt sind.

## Claims

1. Footplate for an aeroplane passenger door of elongated and approximately rectangular shape with an inner and an outer longitudinal edge which is to be fixed by means of screw bolts, characterised in that the footplate is constructed as a milled part in one piece extending over the entire width of the door with a slope directed towards the outboard side and has drainage channels (6) opening into a collecting channel (7) running along the outer longitudinal edge, wherein a rib (5) is disposed in each case between two drainage channels (6) and the ends of the collecting channel (7) each open into a collecting reservoir (8) with a discharge opening (17).

2. Footplate according to Claim 1, characterised in that the drainage channels (6) have a slope towards the collecting channel (7).

3. Footplate according to Claim 1 or 2, characterised in that the tread in the region of the ribs (5) is formed by the upper edges thereof.

4. Footplate according to one of Claims 1 to 3, characterised in that between the ribs (5) and drainage channels (6) surface regions (12) are disposed at approximately equal intervals for the adhesion of a non-slip strip.

5. Footplate according to one of Claims 1 to 4, characterised by openings (13) for adaptation of the footplate (1) to the surrounding structure.

6. Footplate according to one of Claims 1 to 5, characterised by cut-outs (14,15) for adaptation of the footplate (1) to the surrounding structure.

7. Footplate according to one of Claims 1 to 6, characterised in that the collecting reservoirs (8) are each covered by a cover screen (9).

## Revendications

1. Plaque marchepied pour une porte de passagers d'avion, à forme de base allongée, sensiblement rectangulaire, avec une arête longitudinale intérieure et une arête longitudinale extérieure qui sont fixées à l'aide de tiges filetées, caractérisée en ce que la plaque est réalisée sous la forme d'une seule pièce fraisée s'étendant sur toute la largeur de la porte, avec une pente dirigée vers le bord extérieur, et comportant des canaux de drainage (6) débouchant dans un canal collecteur (7) s'étendant le long des arêtes longitudinales extérieures, et chaque fois entre deux canaux de drainage (6) une nervure (5) est disposée et les deux extrémités du canal collecteur (7) débouchent chacune dans un collecteur (8) muni d'un orifice d'évacuation.

2. Plaque marchepied selon la revendication 1, caractérisée en ce que les canaux de drainage (6) présentent une pente en direction du canal collecteur (7).

3. Plaque marchepied selon la revendication 1 ou 2, caractérisée en ce que la surface du marchepied est formée au niveau des nervures (5) par leur bord supérieur.

4. Plaque marchepied selon l'une des revendications 1 à 3, caractérisée en ce qu'entre les nervures (5) et les canaux de drainage (6), à des intervalles pratiquement équidistants, on a des zones de surfaces (12) pour coller des bandes antidérapantes.

5. Plaque marchepied selon l'une des revendications 1 à 4, caractérisée par des ouvertures (13) pour adapter la plaque (1) à la structure environnante.

6. Plaque marchepied selon l'une des revendications 1 à 5, caractérisée en ce que la structure périphérique comporte des encoches (14, 15) pour l'adaptation de la plaque (1).

7. Plaque marchepied selon l'une des revendications 1 à 6, caractérisée en ce que les cuves collectrices (8) sont chaque fois recouvertes d'un couvercle faisant tamis (9).
